# FASCICULE DE BREVET EUROPEEN

(11) **EP 2 724 551 B1**
(45) Date de publication et mention de la délivrance du brevet: **15.04.2015**
(21) Numéro de dépôt: 12744119.4
(22) Date de dépôt: 26.06.2012
(51) Int. Cl.: H04Q 9/00, G01D 4/00

(54) **PROCÉDÉ DE TÉLÉ-RELÈVE DES COMPTEURS DE FLUIDE, COMPTEUR ET SERVEUR ASSOCIÉS A CE PROCÉDÉ**
VERFAHREN ZUR FERNABLESUNG EINES DURCHFLUSSMESSERS SOWIE MESSGERÄT UND SERVER FÜR DAS VERFAHREN
METHOD FOR REMOTELY READING FLUID METERS, AND METER AND SERVER ASSOCIATED WITH SAID METHOD

(30) Priorité: 27.06.2011 FR 1155664
(43) Date de publication de la demande: 30.04.2014
(73) Titulaire: Suez Environnement, 92040 Paris La Defense Cedex (FR)
(72) Inventeur: CALVEZ, Philippe, 78280 Guyancourt (FR)
(74) Mandataire: Cabinet Armengaud Aîné
(86) Numéro de dépôt international: PCT/IB2012/053219
(87) Numéro de publication internationale: WO 2013/001450

(56) Documents cités:
- EP-A1- 0 809 374

## Description

La présente invention est relative à un procédé de télé-relève de compteurs de fluide selon lequel un compteur comporte un module avec une horloge compteur et un émetteur radio pour transmettre une trame d'information horodatée de télé-relève vers un serveur qui comporte une horloge serveur.

L'invention concerne également le compteur et le serveur spécifiques associés à ce procédé.

L'invention concerne plus particulièrement, mais non exclusivement, les compteurs d'eau ou de gaz.

Dans un réseau classique de télé-relève Radio Fréquence, les émetteurs des compteurs transmettent leurs données selon un éphéméride préétabli avec une périodicité déterminée. Les émetteurs sont programmés, par exemple, pour effectuer une mesure ou une transmission à 6h00, 12h00, 18h00 et 24h00.

Les émetteurs, alimentés par pile électrique, sont conçus pour fonctionner pendant une période de l'ordre de 15 à 20 ans. Afin de réduire le coût de ces produits, on utilise des quartz bon marché de qualité relativement faible. Classiquement les horloges à quartz des compteurs ont une précision intrinsèque de l'ordre de +/- 20 pour un million (ppm) et une dérive en vieillissement de l'ordre de +/-3 pour un million (ppm) par an. On peut donc avoir au bout de 10 ans un décalage temporel de l'ordre de 40, ou plus, pour un million. Ce qui signifie que l'on peut s'être décalé de 1,4 heure après 10 ans et de 5,5 heures après 20 ans.

En conséquence les instants de mesure (respectivement d'émission) des émetteurs se décalent aussi dans le temps et les dates d'émission initialement programmées par rapport à une heure absolue, généralement heure UTC (*Coordinated Universal Time*)*,* ne sont plus respectées.

La principale difficulté réside donc dans la mise à jour régulière de l'horloge des émetteurs à travers le réseau Radio Fréquence de télé-relève. Un tel procédé est décrit dans le document EP 0 809 374.

Dans les systèmes en réseau, le protocole NTP est utilisé. Les clients demandent régulièrement à être mis à jour auprès d'un serveur. Le serveur renvoie son heure ainsi que les heures d'arrivée de la requête du client et de départ de la réponse du serveur. Le client connaissant son heure d'émission de requête et l'heure de réception de la réponse peut ainsi calculer la différence de temps entre son horloge interne et l'horloge de référence et le temps de propagation des messages dans le réseau.

Des systèmes de mise à jour régulière de l'heure, par exemple une fois par jour, peuvent aussi être implémentés.

De telles mises à jour génèrent un flux important de données sur le réseau, ce qui a un impact sur son dimensionnement.

Dans un système réseau fixe de télé-relève, on peut trouver différentes architectures pour relever à une heure donnée un compteur : soit le module Radio lié au compteur est bidirectionnel (émetteur / récepteur), soit il est monodirectionnel.

On s'intéresse plus spécialement au cas des réseaux de télé-relève fixe courte portée (Bande ISM 868MHz ou 433MHz).

Dans le cas d'un compteur bidirectionnel, le module en mode réception « écoute » la liaison Radio en attente d'un ordre de relevage. Cet ordre vient d'une entité réseau synchronisée à une référence (ex. Serveur connecté à Internet synchronisé par NTP). La mise en oeuvre d'un véritable réseau bidirectionnel avec modules de compteur en écoute/ réception permanente est complexe, nécessite une infrastructure lourde et consomme beaucoup d'énergie au niveau des piles des compteurs.

Dans le cas d'un compteur monodirectionnel, les modules uniquement émetteurs transmettent toutes les x secondes, x variant de 10 à 40 secondes, la valeur du compteur relevé. Des récepteurs synchronisés, par exemple Gateway GPRS synchronisée par NTP, ou Equipement synchronisé sur GPS, viennent alors « écouter » le transmetteur à l'heure souhaitée. L'erreur temporelle sur la mesure est de l'ordre de la fréquence d'émission du transmetteur soit quelques secondes.

De telles manières de procéder nécessitent d'émettre une grande quantité de données ce qui influe sur le dimensionnement du réseau et a également un impact important sur la consommation électrique du compteur ou sur la portée de l'émetteur. Dans le cas d'un compteur fonctionnant sur piles, cela se traduit par une faible autonomie du compteur.

Par ailleurs utiliser des horloges plus précises générerait un coût important.

Au vu de ces différents inconvénients et difficultés, l'invention a pour but, surtout, de fournir un procédé permettant de garantir une fiabilité de l'horodatage des informations télé-relevées sans impact négatif conséquent, tant sur le dimensionnement et le coût du réseau que sur la consommation électrique du compteur et son autonomie lorsqu'il fonctionne sur batterie ou pile.

Selon l'invention, un procédé de télé-relève de compteurs de fluide selon lequel un compteur comporte un module avec une horloge compteur et un émetteur/récepteur radio pour transmettre une trame d'information horodatée de télé-relève vers un serveur qui comporte une horloge serveur, un récepteur/émetteur radio, est caractérisé en ce que :
- toutes les N trames transmises, le module du compteur passe en mode réception (Rx) pendant un temps (ΔRx) déterminé, après émission de la trame,
- à réception d'une trame information horodatée, le serveur détermine le décalage entre l'information horaire contenue dans la trame reçue et l'information horaire fournie par l'horloge serveur,
- puis, si le décalage est supérieur à une limite prédéterminée (ΔL), le serveur émet un message de recalage à destination du compteur,
- à réception du message de recalage, le module du compteur met à jour l'horloge compteur.

Le nombre N de trames transmises après lesquelles le module compteur passe en mode réception est généralement un nombre entier supérieur à 1. La limite prédéterminée ΔL du décalage pour l'émission d'un message de recalage peut être comprise entre 30 secondes et 2 minutes, en particulier égale à 1 minute.

Avantageusement, le message de recalage comporte une instruction de correction immédiate pour compenser le décalage déterminé, et une instruction de correction périodique pour supprimer ou réduire les décalages futurs, en particulier dus au vieillissement.

De préférence, le module compteur passe en mode transmission, le cas échéant suivi d'un mode réception, selon une période P, pour retourner à l'état repos entre les transmissions afin d'économie d'énergie. La période P peut être de 4 heures ou un multiple de 4 heures.

Le temps ΔRx pendant lequel le module compteur passe en réception peut être compris entre 60 ms (millisecondes) et 200 ms, en particulier égal à 120ms (millisecondes).

Le mode réception Rx peut comporter deux phases, une première phase Rxa d'une durée ΔRxa étant mise en oeuvre par défaut et lorsque, au cours de cette première phase, le module compteur commence à recevoir un message de recalage, le module compteur passe, dans une deuxième phase, en mode de réception Rxb, selon une durée ΔRxb supérieure à celle ΔRxa de la première phase.

La durée ΔRxa de la première phase du mode réception peut être comprise entre 2 et 5 ms, en particulier égale à 3ms. La durée ΔRxb peut être comprise entre 60 ms (millisecondes) et 200 ms, en particulier égale à 120ms (millisecondes).

De préférence, le compteur comporte un identifiant inclus dans chaque trame d'information horodatée transmise vers le serveur.

Suite à une mesure de consommation, l'émission de la trame d'information horodatée peut être différée dans le temps suivant un programme prédéfini, le serveur utilisant l'identifiant du compteur pour identifier le programme correspondant et prendre en compte l'émission différée de la trame dans le calcul du décalage.

L'invention est également relative à un compteur de fluide, en particulier d'eau ou de gaz, comprenant un dispositif de comptage, un module avec horloge compteur, émetteur radio et récepteur radio, et un moyen de mise à jour de l'horloge compteur le rendant apte à une utilisation suivant le procédé défini précédemment.

L'invention est également relative à un serveur comprenant un émetteur et un récepteur, une horloge serveur et un moyen de mesure d'un décalage le rendant apte à une utilisation suivant le procédé selon défini précédemment.

D'autres caractéristiques et avantages de l'invention apparaîtront dans la description qui suit d'un mode de réalisation préféré avec référence aux dessins annexés mais qui n'a aucun caractère limitatif. Sur ces dessins :
Fig. 1 est un schéma d'un compteur d'eau, avec module de télé-relève, communiquant avec un serveur.
Fig. 2 est un schéma illustrant les transmissions entre le compteur et le serveur, et
Fig. 3 est un tableau d'un exemple de décalages et corrections.

Dans le cas d'un réseau fixe de télé-relève longue distance utilisant la bande 169 MHz pour une portée pouvant aller de 50 mètres à plusieurs kilomètres, les modules des compteurs sont monodirectionnels avec seulement un émetteur qui transmet une trame d'information entre 4 et 12 fois par jour, pour des raisons d'économie de batterie ou pile.

Lors de la phase de fabrication, les émetteurs sont calibrés de façon à réduire l'erreur initiale de leur référence de fréquence, mais une dérive temporelle de l'horloge du compteur subsiste.

Selon l'invention, pour supprimer ou réduire cette dérive temporelle de l'horloge, sans compliquer le réseau ni augmenter sensiblement la consommation d'énergie du module compteur, un mode bidirectionnel allégé est implanté par lequel le réseau fixe peut asservir l'horloge de l'émetteur du compteur.

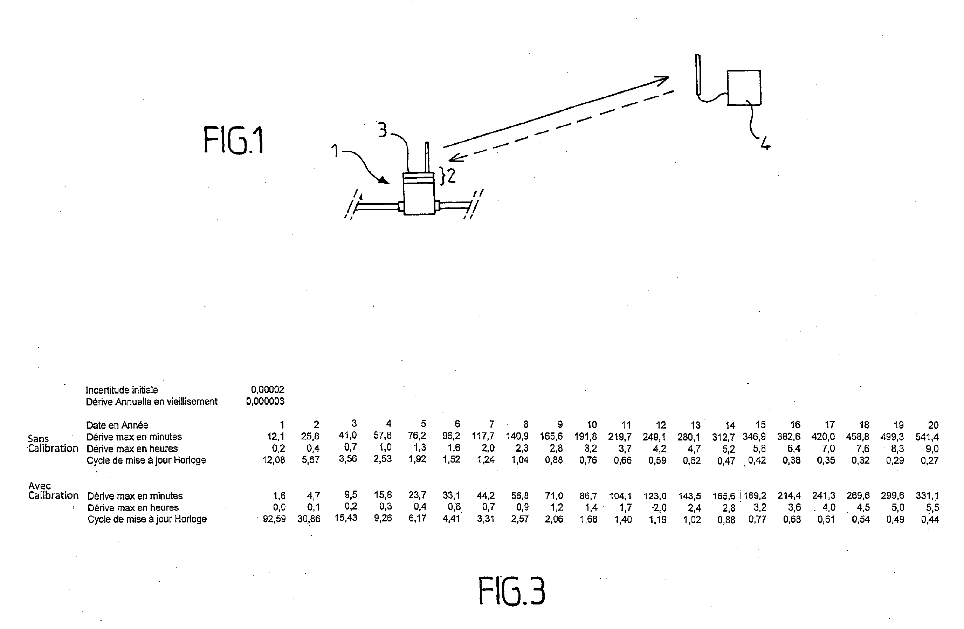

En se reportant à Fig.1 on peut voir un compteur d'eau 1 comportant un module 2 avec une horloge compteur et un émetteur radio 3 pour transmettre une trame d'information horodatée de télé-relève vers un serveur 4 qui comporte une horloge serveur, un récepteur et un émetteur.

L'horloge du module compteur est une horloge à quartz qui présente deux types de dérives : une dérive intrinsèque, positive ou négative, qui est directement issue de la fabrication, et une dérive due au vieillissement, positive ou négative, par rapport au temps universel de référence. Le module compteur comporte un moyen de mise à jour de son horloge.

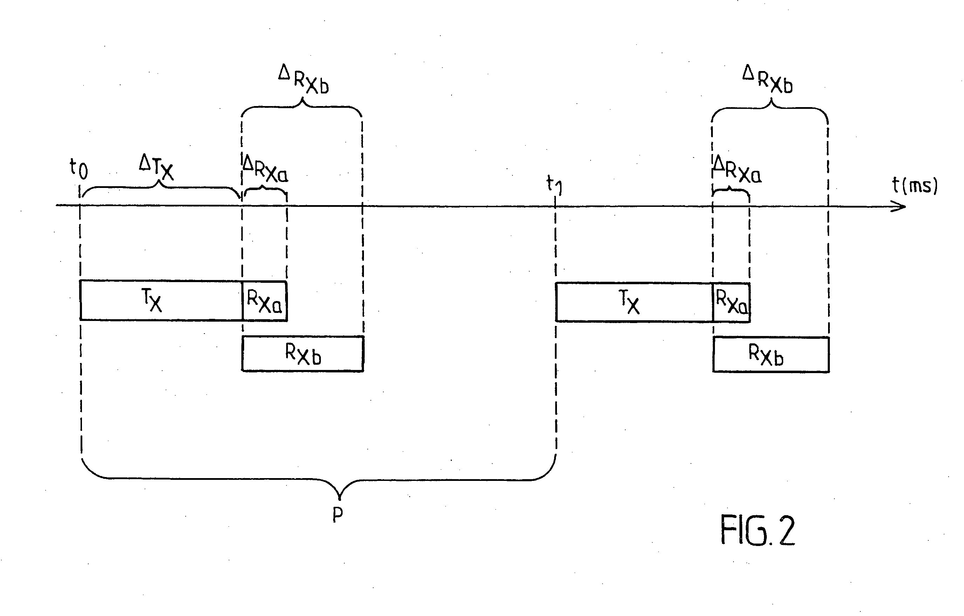

Les transmissions entre le ou les compteurs 1 et le serveur 4, sont schématisées sur Fig. 2 et s'effectuent comme suit, selon l'invention.

Le réseau au niveau du serveur 4 est synchronisé sur le temps universel UTC par un système de type NTP. Donc tous les messages reçus par le serveur 4 en provenance d'un compteur 1 sont horodatés par rapport à l'UTC avec une précision supérieure à la seconde. On peut négliger le temps de propagation de l'onde radio électrique et on admettra que l'heure d'émission des messages est égale à leur heure de réception, ce qui est suffisant pour la précision souhaitée.

Au temps t0 le module du compteur passe en mode transmission Tx pendant un temps ΔTx compris entre 60 ms et 200 ms, en particulier égal à 120ms et émet un message contenant une trame d'information horodatée codée sur 8 bits comprenant une mesure relevée ainsi que le numéro de série du compteur.

En fonction du numéro de série du compteur, de différents champs du message, et de l'heure UTC de réception du message, le serveur 4 est programmé pour déterminer l'instant auquel la mesure a été faite par le module du compteur 1.

Par ailleurs, le serveur identifie l'éphéméride d'émission du module émetteur du compteur, c'est à dire les instants supposés d'émission du compteur. Le serveur 4 est programmé pour déterminer, à l'issue de plusieurs réceptions, la valeur de la dérive fréquentielle de l'horloge du compteur. Cette dérive correspond à la différence entre l'heure universelle théorique à laquelle la mesure était prévue selon l'éphéméride, et l'heure universelle effective de la mesure. Cette dérive peut être négative ou positive selon que l'horloge du compteur retarde ou avance par rapport au temps universel.

Une fois cette dérive calculée, une commande de correction de la dérive peut être simplement transmise sous la forme :
- d'une mise à l'heure immédiate
- et du nombre d'heures après lequel le module compteur devra utiliser son moyen de mise à jour pour systématiquement enlever ou ajouter une valeur de temps déterminée, notamment une seconde, à son horloge interne ou horloge compteur.

Cette commande ne sera envoyée que lorsque l'écart entre l'heure de réception réelle du message et l'heure de réception théorique du message sera supérieur à une limite prédéterminée ΔL, avantageusement comprise entre 30 secondes et 2 minutes, en particulier égale à 1 minute.

Lorsque le temps d'émission ΔTx, notamment de 120 ms, s'est écoulé, le module compteur passe en mode de réception Rx qui comporte avantageusement deux phases. Une première phase Rxa d'une durée réduite ΔRxa, notamment de 3 ms, est mise en oeuvre par défaut.

Si pendant la phase Rxa et le temps ΔRxa, le compteur ne reçoit aucun message, le mode de réception s'interrompt et le compteur attend la prochaine séquence de communication commençant au temps t1 à l'issue d'une période P, en particulier de 4 heures.

Si au cours de la phase Rxa, le module compteur commence à recevoir un message de recalage, le module compteur passe, selon une deuxième phase, en mode de réception Rxb, sur une durée ΔRxb supérieure à celle ΔRxa de la première phase. La durée ΔRxb est comprise de préférence entre 60 ms (millisecondes) et 200 ms, en particulier égale à 120ms (millisecondes).

Lorsque le message de recalage a été reçu en totalité le module compteur sort du mode réception Rxb et cesse de communiquer jusqu'au temps T1 à l'issue de la période P de 4 heures.

Dans le cas où le serveur 4 a déterminé une dérive en vieillissement de l'ordre de 3 pour un million par an, cette dérive est de l'ordre de 3× (365x24x60) / 10⁶, soit de l'ordre de 1.58 minute/an, soit 94.8 sec/an, soit environ 7.9 sec /mois.

Si l'horloge de l'émetteur du compteur est en avance sur le temps universel, une commande de correction sera envoyée par le serveur 4 lorsque l'écart entre l'heure de réception réelle du message et l'heure de réception théorique du message sera supérieur à la limite prédéterminée ΔL, notamment 1 minute.

En réponse à cette commande, le module émetteur du compteur va :
- immédiatement retirer une minute à l'heure de son horloge interne,
- retirer 1 seconde à son horloge interne toutes 92.6 heures (la dérive de vieillissement est de 7.9 sec /mois, soit 7.9 sec / 30.5 × 24h, soit 7.9 sec / 732 h, soit 1 sec / 92.6 h)

Pour expliciter le procédé, un ensemble de valeurs de recalage est donné sous forme de tableau sur Fig.3 pour une horloge précise à 20 ppm à l'instant to (incertitude initiale) et ayant une dérive annuelle en vieillissement de 3 ppm par an.

Le tableau de Fig.3 comporte une première ligne intitulée : Date en Année et deux groupes de trois lignes intitulées : Dérive max en minutes ; Dérive max en heures ; Cycle de mise à jour Horloge.

Le premier groupe de trois lignes correspond à une horloge sans calibration (sans correction de l'incertitude initiale). La dérive maximale pour la première année est de 23 pour un million par an, soit exprimée en minutes :
23× (365x24x60) mn/10⁶ environ 12.09 minutes,
arrondi à 12.1 mn. La dérive totale est donc de l'ordre de 1 minute par mois. Le cycle de mise à jour pour retirer 1 seconde à l'horloge interne sera de 12.08 h la première année. Les valeurs pour les autres années sont données dans le tableau.

Le deuxième groupe de trois lignes correspond à une horloge avec calibration (incertitude initiale corrigée). Pour la première année, la dérive de 3 ppm par an (vieillissement) est d'environ 1.6 minute par an, soit 7.9 sec/mois, soit 1sec / 92.59 h). Le cycle de mise à jour pour retirer 1 seconde à l'horloge interne sera donc de 92.59 h la première année. Pour la deuxième année, la dérive de vieillissement de 6 ppm par an conduit à une dérive de 4.7 minutes par an et à un cycle de mise à jour toutes les 30.86 heures.

Et ainsi de suite pour les années suivantes.

Le dispositif selon l'invention comporte de nombreux avantages.

Il permet d'obtenir des informations de consommation à date fixe, sans erreur notable, ce qui est une exigence de certains consommateurs.

Sans correctif l'horloge compteur peut se décaler de 12 minutes en un an soit de 5.5 heures sur 20 ans, durée de vie estimée d'un compteur. Un tel décalage est souvent inacceptable.

Mais la correction de l'horloge compteur s'effectue sans nécessiter une infrastructure lourde et coûteuse même en émettant sur de longues distances.

Les messages de correction ont une taille très faible, de l'ordre de 8 bits, et n'encombrent donc pas le réseau.

Le fait de travailler selon un mode bidirectionnel allégé permet de n'utiliser qu'une seule fréquence et d'éviter le recours à une infrastructure trop lourde. En effet un véritable réseau bidirectionnel nécessiterait d'implémenter des protocoles de communication lourds.

L'invention s'applique à tout type de compteurs de fluides, en particulier aux compteurs d'eau ou de gaz, mais aussi aux compteurs électriques, le courant électrique étant assimilé à un fluide.

## Revendications

1. Procédé de télé-relève de compteurs de fluide selon lequel un compteur comporte un module avec une horloge compteur, un émetteur/récepteur radio pour transmettre une trame d'information horodatée de télé-relève vers un serveur qui comporte une horloge serveur et un récepteur/émetteur radio, **caractérisé en ce que** :
- toutes les N trames transmises, le module du compteur passe en mode réception (Rx) pendant un temps déterminé (ΔRx), après émission de la trame,
- à réception d'une trame information horodatée, le serveur détermine le décalage entre l'information horaire contenue dans la trame reçue et l'information horaire fournie par l'horloge serveur,
- puis, si le décalage est supérieur à une limite prédéterminée (ΔL), le serveur émet un message de recalage à destination du compteur,
- à réception du message de recalage, le module du compteur met à jour l'horloge compteur.

2. Procédé de télé-relève selon la revendication 1, **caractérisé en ce que** le nombre N de trames transmises après lesquelles le module compteur passe en mode réception est un nombre entier supérieur à 1.

3. Procédé de télé-relève selon la revendication 1 ou 2, **caractérisé en ce que** la limite prédéterminée (ΔL) du décalage pour l'émission d'un message de recalage est comprise entre 30 secondes et 2 minutes, en particulier égale à 1 minute.

4. Procédé de télé-relève selon l'une quelconque des revendications précédentes, **caractérisé en ce que** le message de recalage comporte une instruction de correction immédiate pour compenser le décalage déterminé, et une instruction de correction périodique pour supprimer ou réduire les décalages futurs.

5. Procédé de télé-relève selon la revendication 1, **caractérisé en ce que** le module compteur passe en mode transmission (Tx), le cas échéant suivi d'un mode réception, selon une période (P), pour retourner à l'état repos entre les transmissions afin d'économie d'énergie.

6. Procédé de télé-relève selon la revendication 1, **caractérisé en ce que** le mode réception (Rx) comporte deux phases, une première phase (Rxa) d'une durée (ΔRxa) étant mise en oeuvre par défaut et lorsque, au cours de cette première phase, le module compteur commence à recevoir un message de recalage, le module compteur passe dans une deuxième phase en mode de réception (Rxb), selon une durée (ΔRxb) supérieure à celle (ΔRxa) de la première phase.

7. Procédé de télé-relève selon la revendication 6, **caractérisé en ce que** la durée (ΔRxa) de la première phase du mode réception est comprise entre 2 et 5 ms, en particulier égale à 3 ms.

8. Procédé de télé-relève selon la revendication 1, **caractérisé en ce que** le temps (ΔRx) pendant lequel le module compteur passe en réception est compris entre 60 ms et 200 ms, en particulier égal à 120 ms.

9. Procédé de télé-relève selon l'une quelconque des revendications précédentes, **caractérisé en ce que** le compteur comporte un identifiant inclus dans chaque trame d'information horodatée transmise vers le serveur.

10. Procédé de télé-relève selon la revendication 9, **caractérisé en ce que**, suite à une mesure de consommation, l'émission de la trame d'information horodatée est différée dans le temps suivant un programme prédéfini, le serveur utilisant l'identifiant du compteur pour identifier le programme correspondant et prendre en compte l'émission différée de la trame dans le calcul du décalage.

11. Compteur de fluide, en particulier compteur d'eau ou de gaz, comprenant un dispositif de comptage, un module avec horloge compteur, un émetteur radio, un récepteur radio et un moyen de mise à jour de l'horloge compteur le rendant apte à une utilisation suivant le procédé selon l'une des revendications 1 à 10.

12. Serveur comprenant un émetteur et un récepteur, une horloge serveur et un moyen de mesure d'un décalage le rendant apte à une utilisation suivant le procédé selon l'une des revendications 1 à 10.

## Patentansprüche

1. Verfahren zur Fernablesung von Fluidzählern, bei welchem ein Zähler ein Modul mit einer Zähleruhr sowie einen Funk-Sender/Empfänger zum Übertragen eines Frames zeitgestempelter Fernablesungsdaten an einen Server aufweist, welcher eine Serveruhr und einen Funk-Empfänger/Sender aufweist, **dadurch gekennzeichnet, dass**:
- wenn sämtliche N Frames übertragen sind, das Zählermodul nach der Übertragung des Frames für eine vorbestimmte Zeit (ΔRx) in den Empfangsmodus (Rx) übergeht,
- der Server beim Empfang eines zeitgestempelten Datenframes den Versatz zwischen der in dem Frame empfangenen Zeitdaten zu der von der Serveruhr gelieferten Zeitdaten ermittelt,
- der Server, wenn der Versatz eine vorbestimmte Grenze (ΔL) übersteigt, anschließend eine Korrekturnachricht an den Zähler ausgibt,
- das Zählermodul beim Empfang der Korrekturnachricht die Zähleruhr aktualisiert.

2. Verfahren zur Fernablesung nach Anspruch 1, **dadurch gekennzeichnet, dass** die Anzahl N der übertragenen Frames, nach welcher das Zählermodul in den Empfangsmodus übergeht, eine ganze Zahl größer als 1 ist.

3. Verfahren zur Fernablesung nach Anspruch 1 oder 2, **dadurch gekennzeichnet, dass** die vorbestimmte Grenze (ΔL) des Versatzes für das Ausgeben einer Korrekturnachricht zwischen 30 Sekunden und 2 Minuten liegt, insbesondere gleich 1 Minute ist.

4. Verfahren zur Fernablesung nach einem der vorhergehenden Ansprüche, **dadurch gekennzeichnet, dass** die Korrekturnachricht einen Befehl zur sofortigen Korrektur enthält, um den festgestellten Versatz zu kompensieren, und einen Befehl zur periodischen Korrektur enthält, um zukünftigen Versatz zu vermeiden oder zu verringern.

5. Verfahren zur Fernablesung nach Anspruch 1, **dadurch gekennzeichnet, dass** das Zählermodul gemäß einer Periode (P) in den Sendemodus (Tx) übergeht, gegebenenfalls gefolgt von einem Empfangsmodus, um zwischen den Übertragungen zu Energiesparzwecken in den Ruhezustand zurückzukehren.

6. Verfahren zur Fernablesung nach Anspruch 1, **dadurch gekennzeichnet, dass** der Empfangsmodus (Rx) zwei Phasen aufweist, wobei eine erste Phase (Rxa) von einer Dauer (ΔRxa) standardmäßig implementiert ist, und wenn im Verlauf dieser ersten Phase das Zählermodul beginnt, eine Korrekturnachricht zu empfangen, das Zählermodul in einer zweiten Phase für eine Dauer (ΔRxb) in den Empfangsmodus (Rxb) übergeht, die länger als diejenige (ΔRxa) der ersten Phase ist.

7. Verfahren zur Fernablesung nach Anspruch 6, **dadurch gekennzeichnet, dass** die Dauer (ΔRxa) der ersten Phase des Empfangsmodus zwischen 2 und 5 ms beträgt, insbesondere gleich 3 ms ist.

8. Verfahren zur Fernablesung nach Anspruch 1, **dadurch gekennzeichnet, dass** die Zeit (ΔRx), während welcher das Zählermodul in den Empfangsmodus übergeht, zwischen 60 ms und 200 ms beträgt, insbesondere gleich 120 ms ist.

9. Verfahren zur Fernablesung nach einem der vorhergehenden Ansprüche, **dadurch gekennzeichnet, dass** der Zähler eine Kennung aufweist, die in jedem an den Server übertragenen zeitgestempelten Datenframe enthalten ist.

10. Verfahren zur Fernablesung nach Anspruch 9, **dadurch gekennzeichnet, dass** nach einer Verbrauchsmessung das Senden des zeitgestempelten Datenframes nach einem vordefinierten Programm zeitlich versetzt wird, wobei der Server die Kennung des Zählers verwendet, um das entsprechende Programm zu identifizieren und das versetzte Senden des Frames bei der Berechnung des Versatzes zu berücksichtigen.

11. Fluidzähler, insbesondere Wasser- oder Gaszähler, mit einer Zählvorrichtung, einem Modul mit Zähleruhr, einem Funksender, einem Funkempfänger und einer Einrichtung zum Aktualisieren der Zähleruhr, wodurch dieser zur Verwendung nach dem Verfahren gemäß einem der Ansprüche 1 bis 10 geeignet ist.

12. Server mit einem Sender und einem Empfänger, einer Serveruhr und einer Einrichtung zum Messen eines Versatzes, wodurch dieser zur Verwendung nach dem Verfahren gemäß einem der Ansprüche 1 bis 10 geeignet ist.

## Claims

1. A method for remotely reading fluid meters, according to which a meter has a module having a meter clock and a radio transmitter/receiver for transmitting a frame of time-stamped remote-reading information to a server which has a server clock and a radio transmitter/receiver, **characterized in that**:
- every N frames transmitted, the module of the meter enters receiving mode (Rx) for a determined period of time (ΔRx), after transmission of the frame,
- upon receiving a frame of time-stamped information, the server determines the discrepancy between the time information contained in the received frame and the time information provided by the server clock,
- then, if the discrepancy is greater than a predetermined limit (ΔL), the server transmits a reset message to the meter,
- upon receiving the reset message, the module of the meter updates the meter clock.

2. The remote-reading method as claimed in claim 1, **characterized in that** the number N of transmitted frames after which the meter module enters receiving mode is an integer number greater than 1.

3. The remote-reading method as claimed in claim 1 or 2, **characterized in that** the predetermined limit (ΔL) of the discrepancy for the transmission of a reset message is between 30 seconds and 2 minutes, in particular equal to 1 minute.

4. The remote-reading method as claimed in any one of the preceding claims, **characterized in that** the reset message has an immediate correction instruction for compensating for the determined discrepancy, and a periodical correction instruction for removing or reducing future discrepancies.

5. The remote-reading method as claimed in claim 1, **characterized in that** the meter module enters transmitting mode (Tx), if necessary followed by a receiving mode, according to a period (P), for returning to the quiescent state between transmissions in order to save energy.

6. The remote-reading method as claimed in claim 1, **characterized in that** the receiving mode (Rx) has two phases, a first phase (Rxa) of a duration (ΔRxa) being implemented by default, and when, during the course of this first phase, the meter module begins to receive a reset message, the meter module enters, in a second phase, receiving mode (Rxb), for a duration (ΔRxb) greater than that (ΔRxa) of the first phase.

7. The remote-reading method as claimed in claim 6, **characterized in that** the duration (ΔRxa) of the first phase of the receiving mode is between 2 and 5 ms, in particular equal to 3 ms.

8. The remote-reading method as claimed in claim 1, **characterized in that** the time (ΔRx) over which the meter module enters receiving mode is between 60 ms and 200 ms, in particular equal to 120 ms.

9. The remote-reading method as claimed in any one of the preceding claims, **characterized in that** the meter has an identifier included in each frame of time-stamped information transmitted to the server.

10. The remote-reading method as claimed in claim 9, **characterized in that**, following a consumption measurement, the transmission of the frame of time-stamped information is deferred in time according to a predefined program, the server using the identifier of the meter to identify the corresponding program and to take into account the deferred transmission of the frame in the calculation of the discrepancy.

11. A fluid meter, in particular a water or gas meter, comprising a metering device, a module with a meter clock, a radio transmitter, a radio receiver and a means for updating the meter clock, making it suitable for use according to the method as claimed in one of claims 1 to 10.

12. A server comprising a transmitter and a receiver, a server clock and a means for measuring a discrepancy, making it suitable for use according to the method as claimed in one of claims 1 to 10.
